# EUROPEAN PATENT APPLICATION

(11) **EP 1 365 140 A2**
(43) Date of publication of application: **26.11.2003**
(21) Application number: 03011125.6
(22) Date of filing: 22.05.2003
(51) Int. Cl.: F02M 29/06, F02M 31/04

(54) **Fuel-heating type fuel injection apparatus for internal combustion engine**

(30) Priority: 23.05.2002 JP 2002148492
(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Saeki, Hiroaki, Hitachi Car Engineering Co., Ltd., Hitachinaka-shi, Ibaraki 312-0062 (JP); Ichihara, Takanobu, Hitachi, Ltd., Intell.Prop.Gr., Chiyoda-ku, Tokyo 100-8220 (JP); Watanabe, Kenji, Hitachi, Ltd., Intell.Prop.Gr., Chiyoda-ku, Tokyo 100-8220 (JP)
(74) Representative: Beetz & Partner Patentanwälte

(57) **Abstract**

The present invention relates to a fuel-heating type fuel injection apparatus, at the startup of the engine (1), able to prevent fuel-attaching on the wall of the intake passage (34) and eliminate hydro carbons in the exhaust.

A fuel-heating type fuel injection apparatus has a main intake passage (34) for supplying air into cylinders of the internal combustion engine (1). The main passage (34) is equipped with a throttle valve (15) and a bypass passage (35) for bypassing the throttle valve (15). On idling operation, when the intake air flows through the bypass passage (35), the airflow rate is controlled by using the throttle valve (15), and the airflow is given a swirling force. The swirling airflow is heated mixing with fuel and fed into an internal combustion engine (1).

## Description

### BACKGROUND OF THE INVENTION

### (Field of the Invention)

The present invention relates to a fuel injection apparatus equipped with a fuel injection valve which injects fuel to an airflow bypassing a throttle valve, heats the fuel-air mixture with a heater, and sends it to an intake passage (pipe) or cylinders and an internal combustion engine equipped therewith.

### (Prior Art)

U.S. Pat. No. 5,482,023 discloses a cold-start fuel control system comprising a cold start fuel injector, a heater, and an idle speed control valve (hereinafter abbreviated as the ISC valve). This system causes a part of air from the ISC valve to mix with fuel injected from the cold-start fuel injector. The fuel from the cold-start fuel injector is, being mixed with air from the ISC valve, fed into a series of cylindrical heaters lined up in the downstream side of the cold-start fuel injector. The fuel is vaporized while passing through the heaters and mixed with air flowing through the main intake passage at the exit of the heater unit.

Such a cold-start fuel control system is also disclosed in U.S. Pat. No. 5,598,826 and U.S. Pat. No. 5,894,832. This system provides the ISC valve on the subsidiary passage which bypasses the throttle valve, generates a swirl flow by air metered by the ISC valve, and mixes the swirling air flow with fuel injected by the cold start injector.

### SUMMARY OF THE INVENTION

### (Problems to be solved by the Invention)

Each of the above conventional systems provides an ISC valve in a subsidiary passage which bypasses a throttle valve, generates an air swirl by air flowing through the ISC valve, and causes fuel to attach to the inside of cylindrical heaters in a subsidiary passage or main passage to vaporize it.

The conventional system requires components such as an intake subsidiary passage and an ISC valve, etc. This makes the system composition complicated, increases its production cost and further makes it harder to be installed on the engine.

An object of the present invention is to provide a heating type fuel injection apparatus without an ISC valve, which is mounted separately from a primary fuel injection valve near a cylinder (or an intake port) of the internal combustion engine or from a primary fuel injection valve for supplying directly into a cylinder. It works to mix fuel injected by a secondary injection valve with air, when the engine requires its working at a start-up of the engine etc, heats the fuel-air mixture by a heater, and feeds the heated mixture to the cylinder.

Another object of the present invention is to provide a heating type fuel injection apparatus which enable to improve the start-up and combustion characteristics of the internal combustion engine and reduces emission of hydro carbons (abbreviated as HC) in the exhaust gas.

### (Means for Solving the Problems)

To accomplish at least one of the above objects, the present invention provides the system to regulate a mass airflow on idling by controlling the opening of a throttle valve. The regulated air is fed bypassing the throttle valve to the downstream side of the throttle valve, and then given a swirling force by a rectifying plate or deflection blades etc. at the exit facing to an intake passage. A swirling airflow generated by it is further mixed with fuel injected from the secondly fuel injection valve, and at least one part of the fuel-air mixture is heated by a heater provided in the intake passage.

As another means to accomplish the objects, the present invention provides the system to regulate a mass airflow on idling by controlling the opening of a throttle valve like above means, and then lead the regulated idle air to the downstream side of the throttle valve through a fuel-air mixture chamber. The fuel-air mixture chamber is equipped with a fuel injection valve and a rectifying member or a swirling means to give a swirling force to the airflow which comes into the chamber.

As still another means to accomplish the objects, As another means to accomplish the objects, the present invention provides the system to regulate a mass airflow on idling by controlling the opening of a throttle valve like above mentioned, and lead the regulated idle air to the downstream side of the throttle valve through a fuel-air mixture chamber.

The fuel-air mixture chamber is equipped with a heater to heat the fuel-air mixture in addition to above mentioned fuel injection valve, the rectifying member or the swirling means. Further, by using a plurality of fuel-air mixture passages, the fuel-air mixture chamber and an intake port of each cylinder in engine are connected.

The basic means common to the above inventions, in a fuel injection system, mixes fuel with airflow supplied from an air inlet opened in the upstream side of the throttle valve at the idle opening position, heats the fuel-air mixture with heaters and supplies the heated mixture to the intake passage in the downstream side of the throttle valve. Wherein, the opening of the air inlet is controlled by a motor which drives the throttle valve in a fuel injection system.

The present invention also updates the composition of the internal combustion engine. The fuel injection apparatus of the present invention can comprise an air inlet in the inner wall of an intake passage (pipe etc.) in the upstream side of a throttle valve when the throttle valve is located on the idle opening position, a fuel-air mixture chamber which meets the intake passage in the downstream side of said throttle valve, a fuel injection valve which supplies injected fuel to the fuel-air mixture chamber, an air swirling element to give a force to make the swirling air flow in the fuel-air mixture chamber when the air flows into the fuel-air mixture chamber, a heater in the inner wall of the fuel-air mixture chamber to heat at least one part of the swirling mixture in the fuel-air mixture chamber, a plurality of fuel-air mixture passages that connect said fuel-air mixture chamber and the inlet port of each cylinder of the engine, and/or another fuel injection valve which is different from said fuel injection valve in each of the intake ports or cylinders

Further, concrete fuel injection units of the present invention are described in claims 6 and 7.

### BRIEF DESCRIPTION OF THE DRAWINGS

Fig. 1 is a schematic block diagram of the fuel injection unit which is a first embodiment of the present invention and an internal combustion engine therewith.
Fig. 2 is a schematic block diagram of the fuel injection unit which is a first embodiment of the present invention in which the throttle valve is fully closed.
Fig. 3 is a detail view of the section P in the fuel injection unit of Fig. 2.
Fig. 4 is a detail view of the section Q in the fuel injection unit of Fig. 2.
Fig. 5 is a schematic block diagram of the fuel injection unit which is a first embodiment of the present invention in which the throttle valve is fully opened and air flows through the system.
Fig. 6 is a detail view of the section R in the fuel injection unit of Fig. 5.
Fig. 7 is a detail view of the section S in the fuel injection unit of Fig. 5.
Fig. 8 is a cross-sectional view of the swirler in the fuel injection unit which is a first embodiment of the present invention.
Fig. 9 is a cross-sectional view of another swirler in the fuel injection unit which is a first embodiment of the present invention.
Fig. 10 is a schematic block diagram of the fuel injection unit which is a second embodiment of the present invention
Fig. 11 is a schematic block diagram of the fuel injection unit which is a third embodiment of the present invention
Fig. 12 is a schematic block diagram of the fuel injection unit which is a fourth embodiment of the present invention and an internal combustion engine therewith.
Fig. 13 is a schematic block diagram of the fuel injection unit which is a fourth embodiment of the present invention in which the throttle valve is fully opened and air flows through the system.
Fig. 14 is a detail view of the section R in the fuel injection unit of Fig. 13.
Fig. 15 is a detail view of the section S in the fuel injection unit of Fig. 13.
Fig. 16 is a schematic block diagram of the fuel injection unit which is a fourth embodiment of the present invention
Fig. 17 is a detail view of the significant section R in the fuel injection unit of Fig. 16.

### DETAILED DESCRIPTION OF THE PREFERRED EMBODEMENTS OF THE INVENTION

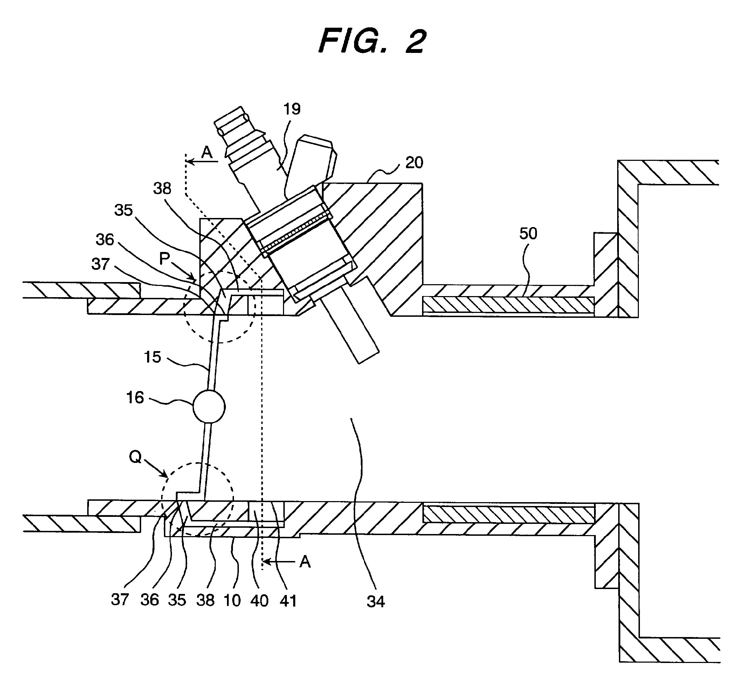

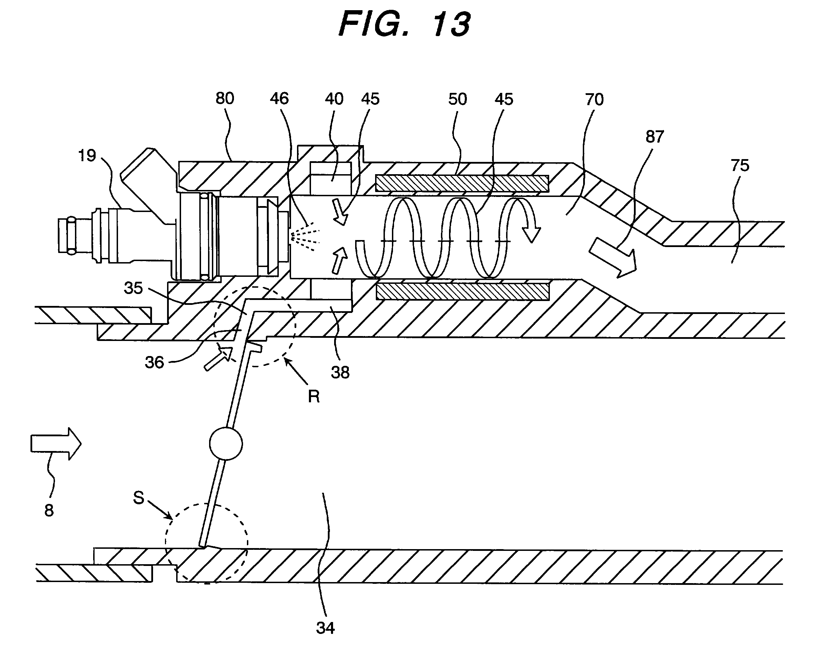

Below will be described the basic composition of the present invention referring to drawings of embodiments. In the description of embodiments, like reference numerals in figures represent the same or similar elements.
1) A swirling element (swirler 40) is provided in an air passage (auxiliary air passage 35). The air passage 35 introduces air metered by a throttle valve 15 from the upstream side of the throttle valve 15 to the downstream side of it bypassing the throttle valve 15. The swirler 40 is to give a swirling force to the airflow. The swirling airflow is sent to the main passage (main intake passage 34). A fuel injection valve (a secondary fuel injection valve 19) is to inject fuel to the swirling air. A heater 50 is provided on the inner wall of the intake passage to heat the fuel contained the swirling air-fuel mixture. (See Fig. 2, Fig. 5, and Fig. 16.)
2) Another basic composition provides a fuel-air mixture chamber 80 in the air passage (auxiliary air passage 35) which introduces air from the upstream side of the throttle valve 15, in the idle opening position, to the downstream side of it bypassing the throttle valve 15. Further the fuel-air mixture chamber 80 is equipped with a fuel injection valve 19, a rectifying member (swirling element or swirler 40) for giving a swirling force to the airflow in the fuel-air mixture chamber 80, and heaters 50 for heating the swirling fuel-air mixture. (See Fig. 13.)
3) Still another basic configuration comprises an air inlet (an opening 36 at the entrance of an auxiliary air passage 35) in the inner wall of an intake passage in the upstream side of a throttle valve 15 when the valve 15 is located on the idle opening position, a fuel-air mixture chamber 80 which meets the intake passage (intake port 14) in the downstream side of the throttle valve 15,
an air passage (auxiliary air passage 35) which connects the air inlet 36 and the fuel-air mixture chamber 80, a fuel injection valve (a secondary fuel injection valve 19) which injects fuel to the fuel-air mixture chamber 80, a rectifying member (swirling element or swirler 40) provided in the exit of the air passage (auxiliary air passage 35) to give a swirling force to the airflow (flowing from the air passage (auxiliary air passage 35)) in the fuel-air mixture chamber 80, and heaters 50 provided in the inner wall of the fuel-air mixture chamber 80 to heat at least part of the swirling fuel-air mixture in the fuel-air mixture chamber 80. This system can do away with the ISC valve and a subsidiary passage for the ISC valve, and facilitates installation of the fuel injection unit in the engine room.

This simplified composition of the fuel injection system enables integrated installation of the system on the throttle valve body or intake passage. Further it is possible to mount a part of the system (e.g. auxiliary air passage, mixing chamber, or swirling element) in a body on the throttle valve body or intake pipe.

The basic items common to the above plurality of inventions is to control the opening of the air inlet (an opening 36 at the entrance of the auxiliary air passage) by a motor 10M which drives the throttle valve 15 in above mentioned heating type fuel injection system. The system mixes fuel with airflow supplied from the air inlet (an opening 36 at the entrance of the auxiliary air passage) opened in the upstream side of the throttle valve 15 at idling operation. The fuel-air mixture is heated with heaters and supplied to the intake passage (main intake passage 34 or intake port 14) in the downstream side of the throttle valve.

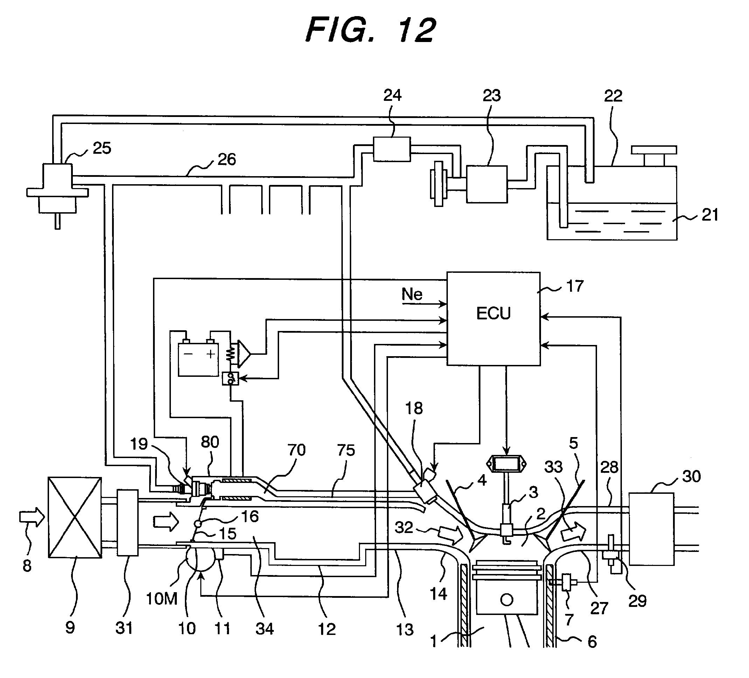

The internal combustion engine of the present invention comprises an air inlet (an opening 36 at the entrance of the auxiliary air passage) in the inner wall of an intake pipe (main intake passage 34) in the upstream side of a throttle valve 15 when the valve 15 is located on the idle opening position, a fuel-air mixture chamber 80 which meets the intake passage (intake port 14) in the downstream side of said throttle valve 15, a fuel injection valve (a secondary fuel injection valve 19) which supplies injected fuel to said fuel-air mixture chamber 80, an air swirling element (a swirling element or swirler 40) to give a force to make an air swirl in the fuel-air mixture chamber when the air flows into said fuel-air mixture chamber 80, a heater in the inner wall of said fuel-air mixture chamber 80 to heat at least one part of the swirling mixture in said fuel-air mixture chamber 80, a plurality of fuel-air mixture passages 75 that communicate said fuel-air mixture chamber and the inlet port (an intake port 14) of each cylinder of the engine, and another fuel injection valve (a primary fuel injection valve 18) which is different from said fuel injection valve (a secondary fuel injection valve 19) in each of the intake ports or cylinders. (See Fig. 12.)

Further, below will be described the detailed composition of a fuel-heating type fuel injection unit which is an embodiment of the present invention.

A fuel-heating type fuel injection unit comprises a main intake passage 34 which supplies air into cylinders (combustion chambers 2) of an internal combustion engine, a body (electronically-controlled throttle body 10) having a throttle valve 15 in the main intake passage 34, a fuel injection valve (a secondary fuel injection valve 19) which injects fuel into the main intake passage 34, and a means (heater 50) which vaporizes fuel in the main intake passage 34. Further, the said fuel-heating type fuel injection unit is equipped with an air passage (auxiliary air passage 35) which flows air from the upstream side of the throttle valve 15 to the downstream side of it measuring by the throttle valve 15. The air passing through the air passage is introduced into the main intake passage 34 and mixed with fuel injected from the fuel injection valve (a secondary fuel injection valve 19).

An another fuel-heating type fuel injection unit comprises a primary fuel injection valve 18 which injects fuel into cylinders (combustion chambers 2) of an internal combustion engine, a main intake passage 34 which supplies air into the cylinders (combustion chambers 2), a body (electronically-controlled throttle body 10) equipped with a throttle valve 15 which regulate the flow rate of air flowing through this main intake passage 34, a bypass passage which connects the main intake passage 34 in the upstream side of the throttle valve 15 and the main intake passage 34 in the downstream side of it, a secondary fuel injection valve which injects fuel into the bypass passage, and means (a fuel-air mixture chamber 80, a swirling element 40, and heaters 50) which vaporize fuel injected into the bypass passage (an auxiliary air passage 35), wherein the bypass passage (an auxiliary air passage 35) is formed as an internal passage in a single unit with the body (electronically-controlled throttle body 10) and contains a swirling element (a swirler) 40 which gives a swirling force to air flowing through the bypass passage (an auxiliary air passage 35).

The embodiment will be described in detail below with reference to the accompanying drawings.

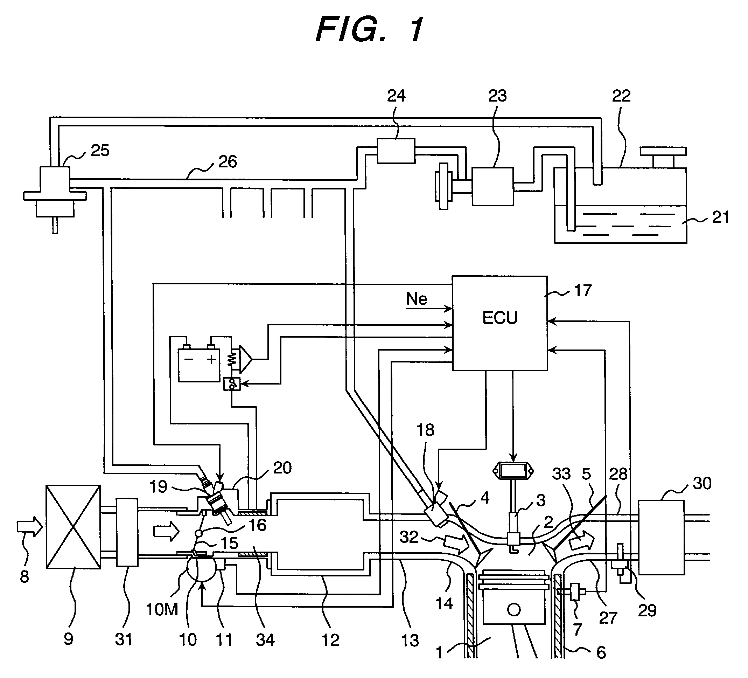

The first embodiment of the present invention will be described referring to Fig. 1 to Fig. 9.

Fig. 1 is a schematic block diagram of the whole spark ignition type internal combustion gasoline engine equipped with a fuel injection apparatus of the present invention.

The internal combustion engine 1 has, in each combustion chamber 2, a spark plug 3, an intake valve 4 to take in air, an exhaust valve 5 to discharge exhaust gas after combustion. The engine 1 is equipped with a water temperature sensor 7 on the side of the combustion chamber 2 to sense the temperature of the engine cooling water 6, and a rotation sensor (not shown in the figure) to sense the rotational speed (running status) of the engine.

The intake system to feed air to the combustion chamber 2 comprises an air flow sensor 31 which measures the flow rate of air taken in through an air cleaner 9 and a motor 10M which is driven in synchronism with the operation of the throttle pedal by the driver or the running status of the internal combustion engine 1. The rotary shaft 16 of the throttle valve 15 is driven by this motor 10M to electrically control the flow rate of the intake air 38. The opening of the throttle valve 15 is measured by a throttle position sensor 11 and controlled in a feed-back manner to match the measured opening with the target value. Further the intake system comprises a collector 12, an intake pipe 13 which branches from the collector to each cylinder of the internal combustion engine 1, and an intake port 14 having an intake valve 4.

The controller 17 receives information of the flow rate of the intake air 8 and the opening of the throttle valve 15 respectively from the airflow sensor 9 and the throttle position sensor11. The controller uses this information to detect and control the running status of the internal combustion engine 1.

The fuel injection unit comprises a primary fuel injection valve 18 and a secondary fuel injection valve 19. The primary fuel injection valve 18 is mounted on the intake port 14 in the downstream side of the collector 12 to inject fuel to the intake valve 4 of each cylinder.

The secondary fuel injection valve 19 is a component of the intake control unit 20. Its composition will be explained later.

The fuel system comprises a fuel tank 22 for storing fuel 21, a fuel pump 23 for pressure-delivering fuel 21 from the fuel tank 22, a fuel filter 24, a pressure regulator 25 for regulating the pressure of the pressure-delivering fuel 21 to a predetermined pressure, a primary fuel injection valve 18 for injecting fuel to the intake port 14 of each cylinder, and a secondary fuel injection valve 19 for supplying fuel 21 to the downstream side of the throttle valve 15. These components are connected with fuel pipes 26. As the secondary fuel injection valve 19 works to supply fuel only after the engine started (after the engine is started by the starter), it requires fuel after the rotation of the fuel pump becomes substantially practical. Therefore, the secondary fuel injection valve 19 is connected to a place which is furthest from the fuel pump in the fuel pipe 26 namely closest to the pressure regulator 25. Thereby, the fuel from the fuel pump may be first supplied to a plurality of primary fuel injection valves 18 which are operated at the startup of the engine. This eliminates operation lags of the primary fuel injection valves and irregular injection rates of fuel.

The exhaust system mainly comprises an exhaust port 27 of each cylinder equipped with an exhaust valve 5, an exhaust pipe 28, an oxygen concentration sensor 29 for measuring the concentration of oxygen, in the exhaust, a three-way catalytic converter 30 for purifying the exhaust, and a sound muffler (not shown in the figure). The information on the concentration of oxygen from the oxygen concentration sensor 29 is sent to the controller 17 and used to detect and control the running status of the internal combustion engine 1. The three-way catalytic converter 30 highly eliminates NOx, CO, and HC in the gas exhausted from the internal combustion engine 1 which is running at a theoretical air-fuel ratio.

In the above configuration, the combustion chamber takes in a mixture of intake air 32 and fuel injected from the fuel injection valves 18 and 19, compresses it, and fired to explode by the spark plug 3. The exhaust gas 33 from the internal combustion engine 1 is discharged to the atmosphere through the exhaust system.

Below will be explained the composition of the intake control unit 20 referring to Fig. 2 to Fig. 7.

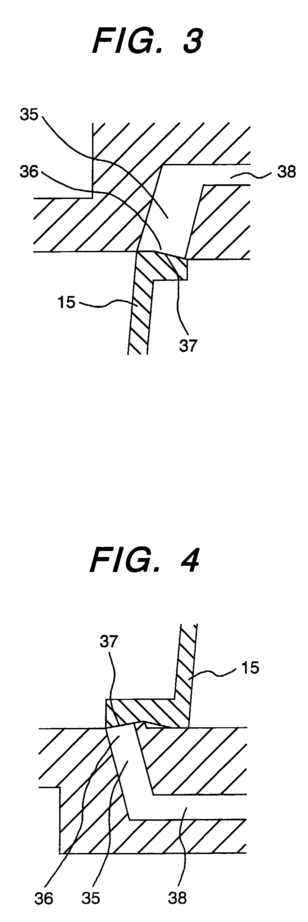

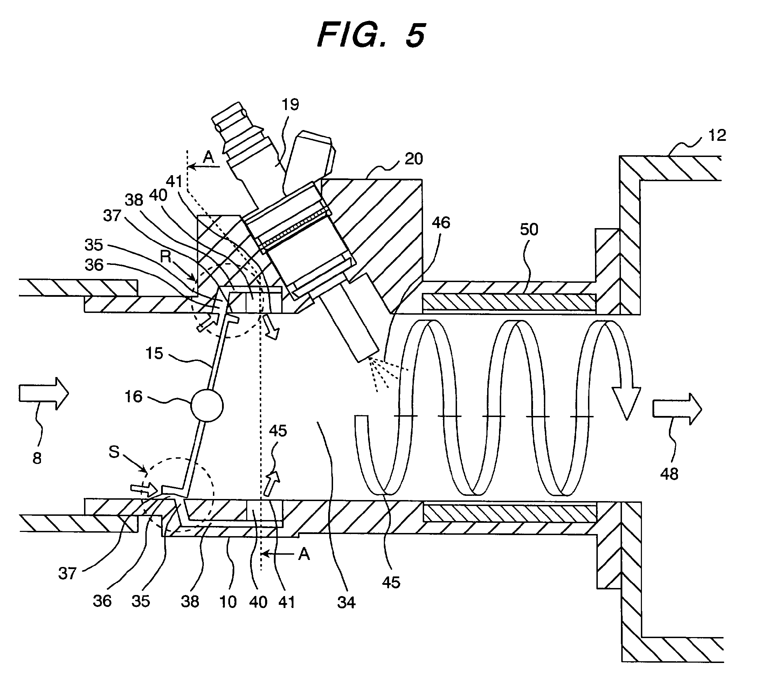

The intake control unit 20 contains a cylindrical main intake passage 34. The main intake passage 34 has a throttle valve 15. When the throttle valve 15 opens, the upstream and downstream sides of the throttle valve open together. The throttle body 10 that forms the main intake passage 34 has an auxiliary air passage (bypass) 35 which connects the upstream and downstream sides of the throttle valve. The opening 36 at the entrance of the auxiliary air passage 35 is formed to match with the peripheral edge 37 of the throttle valve 15 along the inner periphery of the main intake passage 34. When the throttle valve 15 is fully closed, or to minimize the flow rate of air from the throttle valve 15, the opening 36 at the entrance of the auxiliary air passage 35 is closed by the peripheral edge 37 of the throttle valve 15 as illustrated in Fig. 2, Fig. 3 and Fig. 4. Fig. 3 and Fig. 4 are respectively the magnified views of the area in a dotted circle of Fig. 2. To increase the mass air flow from the throttle valve 15, the throttle valve 15 is rotated around the rotary shaft 16. As the throttle valve 15 rotates, the area of the opening 36 at the entrance of the auxiliary air passage 35 increases until it comes to the position indicated by Fig. 5. When the throttle valve 15 rotates further, the airflow area of the main intake passage 34 increases, but the area of the opening 36 at the entrance of the auxiliary air passage 35 remains unchanged.

A swirling element (hereinafter abbreviated as a swirler) 40 is provided in the downstream side of the auxiliary air passage 35 to give a swirling force to the airflow. The airflow made swirling by this swirler 40 is introduced into the main intake passage 34 from the exit 41 of the auxiliary air passage. The composition of the swirler 40 will be explained later.

A secondary fuel injection valve 19 is provided in the downstream side of the exit 41 of the auxiliary air passage. The secondary fuel injection valve 19 injects fuel into the main intake passage (mixing space) so that the injected fuel may be mixed up with the swirling airflow which is fed into the main intake passage 34 from the exit 41 of the auxiliary air passage.

A heater 50 made of a heating element to vaporize the fuel is provided in main intake passage 34 in the downstream side of the exit 41 of the auxiliary air passage. In this embodiment, the heater 50 is provided just after the injection-position of the secondary fuel injection valve 19 (or in the downstream side with respect to the air flow in the main intake passage 34).

The heater 50 comprises a plurality of plate-like heating elements which are disposed cylindrically on the inner wall of the main intake passage 34. The heater is a positive temperature coefficient thermistor (PTC) which keeps the temperature constant by rapidly increasing its electric resistance when the temperature goes over a predetermined value and reducing the current which passes through the heater.

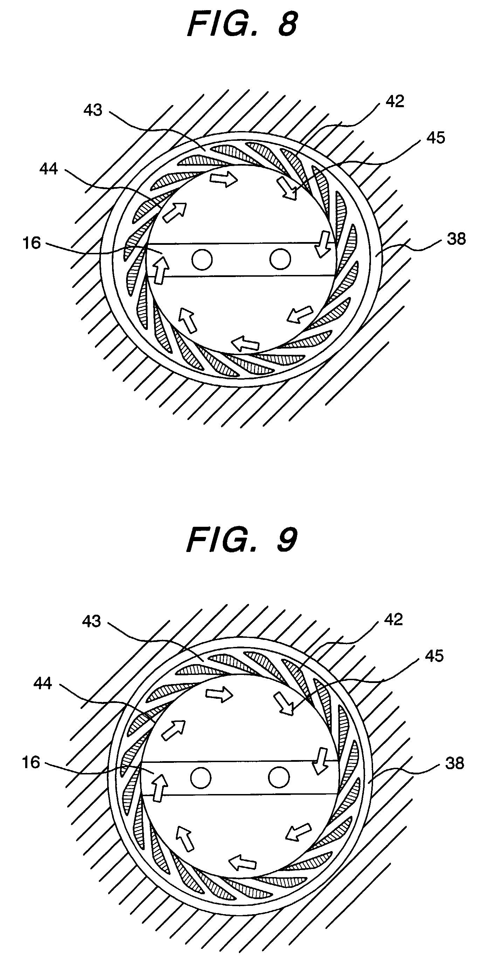

Next, the structure of the swirler 40 will be explained below referring to Fig. 5 and Fig. 9. The swirler 40 is provided in a passage 38 which connects the auxiliary air passage 35 and the main intake passage 34. Its exit is arranged to deliver air to the main passage. Fig. 9 shows the sectional view of the swirler 40 mounted in the inner periphery of the main passage. In details, a plurality of wing-like swirling blades 42 are disposed on the whole inner periphery of the intake pipe to let air flow from the outer peripheral opening 43 of the swirling blade 42 to the inner peripheral opening 44. As the air flows along the surface of the swirling blade 42, the air swirls as indicated by a swirling flow 45 along the inner surface of the main passage when driven way from the inner peripheral opening 44. Further, the diameter of the inner periphery opening 44 is made greater than the inner diameter of the main passage so that the air flows in the main intake passage 34 may not receive a resistance.

The fuel 46 injected from the secondary fuel injection valve 19 is mixed with the swirling air 45 and becomes a swirling fuel-air mixture 46. Thanks to the centrifugal force by the swirling air 45, the fuel-air mixture 46 is swirlingly delivered while being pushed against the inner wall of the main intake passage 34. Thereby, injected fuel 46 may be evenly in contact with the inner wall of the cylindrical heater and swirlingly move along the inner surface of the heater by the swirling air 45. The cylindrical heater 50 heats the fuel attached on the inner wall of the heater, and vaporizes it. The vaporized fuel is mixed up with the intake air into a fuel-air mixture 48 and sent to the collector 12. The fuel-air mixture 48 is then sent to the intake manifold 13 in the downstream side of the collector 12 and finally sent to the combustion chamber 2.

As the fuel-air mixture 48 which contains the vaporized fuel is supplied to the combustion chamber 2, the combustion can be stabilized. Further it is possible to delay the ignition timing (ignition retardance) more than usual particularly until the expansion stroke, keeping the combustion stabilized. When an ignition is made in the expansion stroke, the ratio of expansion of the gas in the combustion chamber becomes less and the heat consumed by the expansion of the gas becomes less. Consequently, hot combustion gas can be directly sent to the exhaust pipe. This can generate a hot exhaust 33 in the exhaust pipe 28 and enable the three-way catalytic converter 30 to warm up and become activated earlier. The activated three-way catalytic converter 30 removes toxic substances such as HC which generate in combustion from the exhaust 33 in the exhaust pipe 28 and sends the purified exhaust to the open air through a sound muffler (not shown in the figure).

Next, the air flowing through the intake control unit 20 will be explained below. The intake air 8 is introduced from the entrance of the auxiliary air passage 35 to an intermediate passage38. The entrance of air passage 35 is formed by the outer peripheral edge 37 of the throttle valve 15 and the opening 36. The intermediate passage 38 interconnects with the swirler 40. The intake air 8 is made to swirl in the swirler 40, and delivered to the main intake passage 34. In this case, the swirling airflow 45 coming out from the swirler 40 should preferably be a uniform flow over the whole periphery of the main intake passage 34. This is because the fuel injected from the secondary fuel injection valve 19 can be vaporized more efficiently when the fuel is evenly attached to the whole inner wall of the heater. To make a uniform swirling airflow over the whole periphery of the main intake passage 34, it is necessary to make the air (it flows out from the inner openings 44 of the swirling blades 42) an identical flow velocity. However, as the throttle valve 15 is circular and rotates around a shaft perpendicular to the flow through the cylindrical main intake passage 34, the open area of the opening 36 at the entrance of the auxiliary air passage does not vary proportionally, and the peripheral area of the opening does not vary evenly. To make air pass evenly through spaces among swirling blade 42 of the swirler, this embodiment makes the peripheral cross-section of the intermediate passage 38 irregular. In other words, the cross-section of the intermediate passage 38 is made smaller at a position which is further from the rotary shaft 16 (at which the opening 36 at the entrance of the auxiliary air passage has a greater open area) and wider at a position which is closer to the rotary shaft 16 (at which the opening 36 at the entrance of the auxiliary air passage has a smaller open area)(See Fig.8).

The peripheral cross-section of the intermediate passage between the auxiliary air passage 35 and the swirler 40 need not be always irregular as described above. It can be uniform as illustrated in Fig. 9.

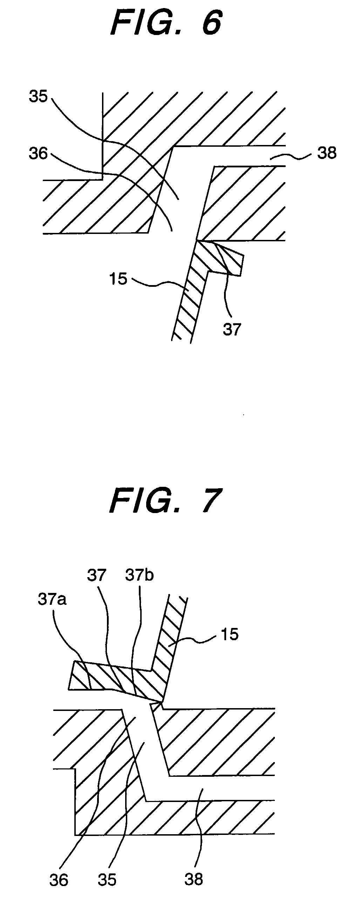

In accordance with this embodiment, the opening 36 at the entrance of the auxiliary air passage is formed to match with the rotating orbit of the outer periphery edge 37 in the upper half of the main intake passage 34 of Fig. 5, that is, at a place where the throttle valve 15 moves toward the advance of the intake air (see Fig. 6 for details). This can always minimize an air leak from the clearance between the outer peripheral edge 37 of the throttle valve 15 and the inner wall of the main intake passage 34 while the throttle valve 15 is rotating in the area of the opening 36 at the at the entrance of the auxiliary air passage. With this, almost all intake air 8 can be directed to the auxiliary air passage 35.

Contrarily, in the lower half of the main intake passage 34 of Fig. 5, that is, at a place where the throttle valve 15 moves away from the advance of the intake air (see Fig. 7 for details), the periphery edge 37 of the throttle valve is made to be parallel with the outer periphery (37a) and the opening 36 is formed to match with it at the entrance of the auxiliary air passage. Further, the outer periphery edge 37b adjoining the parallel section 37a of the outer periphery edge 37 of the throttle valve is formed to have the same shape as the orbit of the outer periphery edge when the throttle valve 15 rotates. In this configuration, when the throttle valve 15 is fully closed, the opening 36 at the entrance of the auxiliary air passage is closed by the parallel section 37a of the outer periphery edge 37 and the mass airflow is limited. While the throttle valve 15 is rotating towards a predetermined position, the open area of the opening 36 at the entrance of the auxiliary air passage varies as the throttle valve rotates.

Further, in accordance with this embodiment, air is fed to the auxiliary air passage 35 only when the internal combustion engine 1 is idling. The suitable rotation of the throttle valve to the mass airflow required for the idling combustion is about 5°. Therefore, the opening 36 at the entrance of the auxiliary air passage is so designed for controlling within this rotation (5°) of the throttle valve. When the throttle valve 15 turns further (over 5°), the main air passage starts to open and the intake air starts to flow downstream of the throttle valve 15 in the main intake passage 34. In other words, when the engine is not idling or when the engine runs with the throttle valve 15 full open, the intake air can be delivered to the combustion chamber 2 without any air resistance in the main air passage.

The intake control unit of the above-described composition can optimize the mass air flow required for combustion while the internal combustion engine 1 is idling by electronically-controlling the throttle valve 15, deliver from the upstream side of the throttle valve 15 to the downstream side through the auxiliary air passage, make the air flow swirl by the swirler 40, and introduce the swirling air flow into the main intake passage 34.

In accordance with this embodiment, an auxiliary air passage 35, a swirler 40, a secondary fuel injection valve 19, a heater unit 50 are assembled in a single unit on an electronically-controlled throttle body 10 containing a throttle valve 15. This can be easily mounted on and demounted from an intake manifold having an intake passage in the upstream side and a plurality of intake pipes in the downstream side. In other words, as a significant device pertaining to startup and exhaust characteristics of an internal combustion engine can be mounted as a single unit on the internal combustion engine, it can make assembling, adjustment, and maintenance of the internal combustion engine easier.

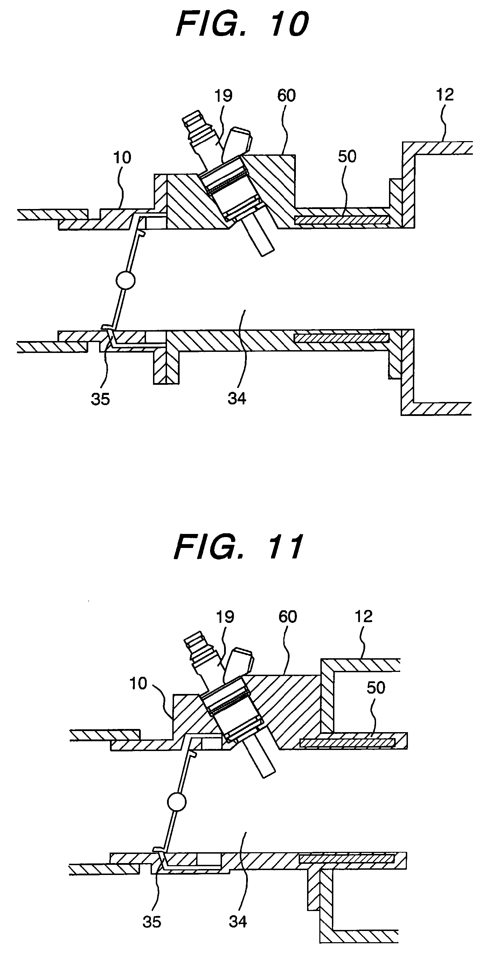

Fig. 10 shows a fuel injection unit which is a second embodiment of the present invention.

Below will be explained differences between first and second embodiments. The electronically-controlled throttle body 10 containing a throttle valve 15 is provided separately from a single integrated unit 60 containing a secondary fuel injection valve 19 and a heater 50. This single integrated unit 60 mounted between the electronically-controlled throttle body 10 and the intake manifold 13 having a collector 12 on a vehicle. The swirler 40 is provided opposite to the single integrated unit 60 of the electronically-controlled throttle body 10.

The other composition of this embodiment is the same as that of the first embodiment and its explanation is omitted here.

In accordance with this embodiment, the electronically-controlled throttle body 10, the single integrated unit 60, and the intake manifold 13 having the collector 12 are separately mounted and demounted. This makes their maintenance simpler and easier.

Fig. 11 shows a fuel injection unit which is a third embodiment of the present invention.

Below will be explained differences between first and third embodiments. An electronically-controlled throttle body 10 and a heater 50 are assembled in a single unit and mounted on an intake manifold 13 having a collector in its downstream side. The heater 50 is projected into the internal air passage of the integrated intake pipes from a place at which the integrated unit 60 and the collector 12 are joined. In this case, the unit to which the integrated unit 60 is mounted is not limited to the collector. The integrated unit 60 can be mounted on the intake manifold 13.

In accordance with this embodiment, the heater 50 is projected into the integrated intake pipes. This can reduce the longitudinal length of the main intake passage 34 and make the fuel injection unit smaller. In other words, the fuel injection unit can be mounted on and demounted from a vehicle more easily.

Next, a fourth embodiment of the present invention will be described below referring Fig. 12 through Fig. 15.

The main difference between the first and fourth embodiments (see Fig. 1) is that an intake subsidiary passage 70 is provided to interconnect the upstream and downstream sides of the throttle valve 15 as a bypass and that the heater 50 for vaporizing fuel injected from secondary fuel injection valve 19 and the swirler 40 for giving a swirling force to the injected fuel are provided in the intake subsidiary passage 70 instead of the main intake passage 34. The other composition of the fourth embodiment is the same as that of the first embodiment and its description is omitted here.

The intake control unit 80 contains a cylindrical main intake passage 34. The main intake passage 34 has a throttle valve 15. When the throttle valve 15 opens, the upstream and downstream sides of the throttle valve interconnect with each other. The electronically-controlled throttle body 10 which forms the main intake passage 34 has an auxiliary air passage 35 which interconnect the upstream and downstream sides of the throttle valve 15. An intake subsidiary passage 70 is formed on the outer periphery of the main intake passage 34 in parallel therewith. This intake subsidiary passage 70 connects the auxiliary air passage 35 with the intake port 14.

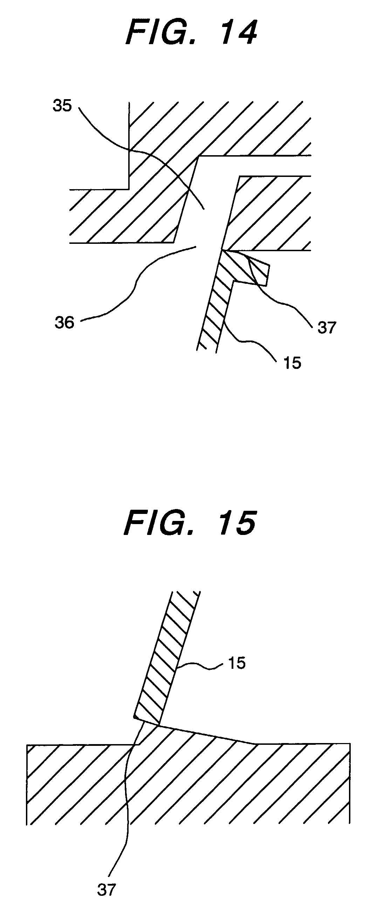

The opening 36 at the entrance of the auxiliary air passage is formed to match with the rotating orbit of the outer periphery edge 37 of the throttle valve 15 in the upper half of the main intake passage 34 of Fig. 13, that is, at a place where the throttle valve 15 moves toward the advance of the intake air (see Fig. 14 for details).

Contrarily, in the lower half of the main intake passage 34 of Fig. 13, that is, at a place where the throttle valve 15 moves away from the intake air (see Fig. 15 for details), the inner wall of the main air passage is formed to match with the rotating orbit of the outer periphery edge 37 of the throttle valve and to satisfy the range between the full closed status of the throttle valve 15 and the maximum open area of the opening 36 at the entrance of the auxiliary air passage. In this range, an air leak from the clearance between the outer peripheral edge 37 of the throttle valve 15 and the inner wall of the main intake passage 34 is minimized. Therefore, while the throttle valve 15 is rotating in the area of the opening 36 at the at the entrance of the auxiliary air passage, almost all intake air 8 can be directed to the auxiliary air passage 35, that is, to the intake subsidiary passage 70.

A swirler 40 is provided in the downstream of the auxiliary air passage 35 to give a swirling force to the airflow. The airflow passing through the swirler 40 is made to swirl and delivered to the intake subsidiary passage 70. The configuration of the swirler 40 is the same as that of the first embodiment and its description is omitted here.

The intake subsidiary passage 70 is cylindrical and a cylindrical heater 50 is provided on part of the intake subsidiary passage 70 in the downstream side of the swirler 40.

In the downstream side of the heater 50, the intake subsidiary passage 70 runs along the main intake passage 34 to the exit near the primary fuel injection valve 18 bypassing the collector 12 and the intake manifold 13 (in the downstream side of the collector 12). The intake subsidiary passage 70 need not always run to the vicinity of the primary fuel injection valve 18. For example, it can run to connect with the collector 12 or with the intake manifold 13.

A secondary fuel injection valve 19 is provided in the upstream side of the swirler 40. The fuel injected from the secondary fuel injection valve 19 is mixed with the swirling air 45 coming from the swirler 40 in the downstream side of the valve 19, and attached to the inner wall of the heater in the downstream side. The attached fuel is further delivered on the inner wall of the heater by the swirling flow 45 and vaporized by the heater during this delivery. The vaporized fuel is mixed up with the intake air into a fuel-air mixture 48 and sent to the intake port 14 through the subsidiary intake passage 70 and finally to the combustion chamber 2.

As this embodiment uses a subsidiary intake passage 70 different from the main intake passage 34 to vaporize fuel and send the fuel vapor to the internal combustion engine 1, the heater 50 need not be provided in the main intake passage 34. Therefore the longitudinal length of the main intake passage can be reduced and the fuel injection unit can be mounted on the vehicle more easily. Further it can be united with an electronically-controlled or non-electronically-controlled throttle body. In this case, the air passage between the auxiliary air passage 35 and the swirler 40 can be formed in the throttle body 10 or in the intake control unit 80. Therefore, no additional outside pipe is required to provide the auxiliary air passage 35 and the configuration of the fuel injection unit can be made simple. This can reduce the production cost and installation steps of the unit.

Next will be explained a fifth embodiment of the present invention.

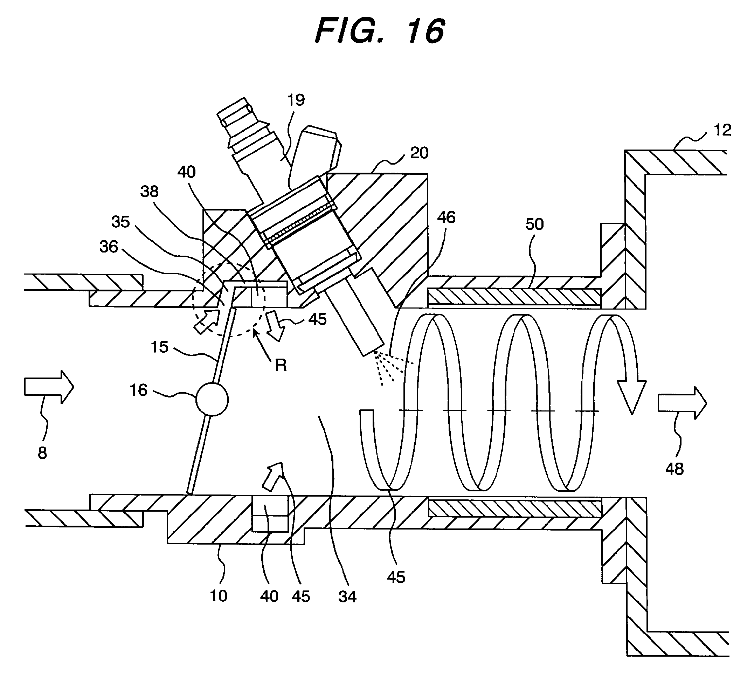

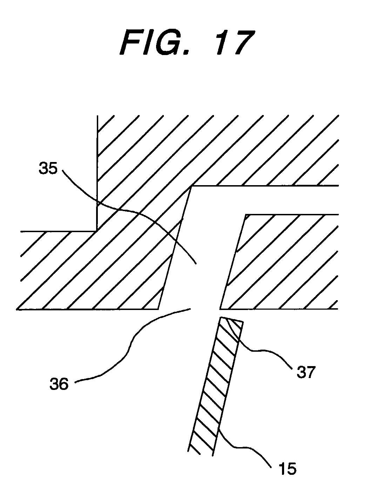

In the first to fourth embodiments, the mass airflow to the swirler 40 can be maximized by minimizing the air leak from the clearance between the outer periphery edge 37 of the throttle valve 15 and the inner wall of the throttle body 10. For this purpose, the outer periphery edge 37 of the throttle valve 15 must be so formed as already described in embodiments 1 to 4. Substantially, however, it is not always necessary to maximize the mass airflow to the swirler 40. As indicated by Fig. 16 and Fig. 17, the throttle valve 15 of this embodiment is a simple disk and no particular means is employed to minimize the clearance between the outer periphery edge 37 of the throttle valve and the inner wall of the throttle body 10. Substantially, however, the rotation of the throttle valve 15 is small and the clearance between the outer periphery edge 37 of the throttle valve and the inner wall of the throttle body 10 is small enough. In other words, this embodiment can also introduce almost all intake air to the auxiliary air passage 35.

Further, in this embodiment, the auxiliary air passage is provided on the upper half above the center shaft 16 of Fig. 16. The inner wall of the throttle body 10 is straight cylindrical before and after the throttle valve 15 in the lower half of Fig. 16. As already described, the air leak from the clearance between the outer periphery edge 37 of the throttle valve and the inner wall of the throttle body 10 is small also in this configuration. To increase the mass air flow to the auxiliary air passage 35, the inner wall of the throttle body 10 below the shaft 16 of Fig. 16 should be formed as described in the fourth embodiment. This concentrates the intake air to the upper half (above the shaft 16) and subsequently increases the mass air flow to the auxiliary air passage 35.

In accordance with this embodiment, as the throttle valve 15 is made of a simple disk, the throttle valve 15 can be manufactured in less steps and, as the result, its production cost becomes less.

The embodiments of the present invention are enumerated below.
1) A fuel injection apparatus of claim 6, wherein a swirling element is provided to give a swirling force to an airflow which is introduced into the main intake passage through the throttle valve.
2) A fuel injection apparatus of claim 6 , wherein the mass air flow is metered by the rotation of the throttle valve.
3) A fuel injection apparatus of claim 6 wherein the mass air flow is regulated only by the rotation of the throttle valve and the whole mass air flow is required by the idling internal combustion engine.
4) A fuel injection apparatus of claim 6 wherein the flow passage area of the air passage through which air flows, the entrance area of the air passage, or the exit entrance of the air passage is not even in the peripheral direction.
5) A fuel injection apparatus of claim 6 wherein the direction of fuel injection towards the swirling element is not along the movement of the airflow in the main intake passage.
6) A fuel injection apparatus of claim 6 wherein fuel is injected towards the downstream side of the swirling element instead of along the movement of the airflow in the main intake passage.
7) A fuel injection apparatus of claim 6 wherein fuel is injected along the swirling direction of the swirling airflow.
8) A fuel injection apparatus of claim 6 wherein fuel is injected in any other direction than along the swirling direction of the swirling airflow.
9) A fuel injection apparatus of claim 6 wherein the throttle valve body, the fuel injection valve, and the unit to vaporize injected fuel are assembled in a single unit with the swirling element there between.
10) A fuel injection apparatus of claim 6 wherein
   a surge tank for the intake manifold integrating section is provided in the downstream side of said fuel injection valve and said fuel vaporizing unit to distribute fuel to each cylinder of the internal combustion engine,
   a single unit of said the fuel injection valve and said fuel vaporizing unit is mounted on said surge tank, and
   the swirling element is provided between said surge tank and said throttle valve body.
11) A fuel injection apparatus of claim 6 wherein said fuel vaporizing unit is mounted so as to be projected into the surge tank.
12) A fuel injection apparatus of claim 6 wherein the airflow passing through the throttle valve is introduced into the main intake passage in parallel with the airflow in the main passage.
13) A fuel injection apparatus of claim 6 wherein the mass air flow moving through the bypass passage is regulated arbitrarily from the outer periphery of the throttle valve.
14) A fuel injection apparatus of claim 7 wherein the section between the branch towards said bypass passage in the upstream side of the throttle valve and said fuel vaporizing unit is assembled in a single unit on said body including the air passage.

Further, these embodiments are characterized in that the mass airflow towards auxiliary intake passage 35 is controlled by the throttle valve 15 driven by the motor 10M. For this purpose, the mass airflow is metered to satisfy the quantity of air required to retain the idle rotation. At the same time, the quantity of fuel is regulated to retain the idle rotation. The quantity of fuel is determined by a target opening signal from the throttle valve.

In the embodiment of Fig. 12, the fuel-air mixture is sent to the intake port 14 of each cylinder through a plurality of branched fuel-air mixture passages 75.

This can prevent fuel in the fuel-air mixture from being held in the surge tank and eliminate a timing lug of fuel to enter a target cylinder (because of a stall in the surge tank).

Subsequently, the concentration and quantity of the fuel-air mixture can be regulated for each cylinder.

### (Effects of the Invention)

From the foregoing, it can be seen that the present invention provides a fuel-heating type fuel injection unit which can be easily and quickly mounted on a vehicle. Further, when combined with an electronically-controlled throttle, the fuel-heating type fuel injection unit can omit the ISC valve. This can reduce the production cost and installation space of the system.

Further, this invention can provide an internal combustion engine having a function of supplying a required quantity of fuel-air mixture when required.

## Claims

1. A fuel-heating type fuel injection apparatus used for an internal combustion engine (1), said fuel injection apparatus comprising:
an air inlet (36) in the inner wall of an intake passage (34) in the upstream side of a throttle valve (15) when said throttle valve (15) is located on the idle opening position,
an air outlet in the inner wall of an intake passage (34) in the downstream side of said throttle valve (15);
an air passage connecting said air inlet (36) and said air outlet,
a rectifying member (40) provided on the exit of said air passage to give a force to make a swirling air flow in said intake passage (34) when the air flows from said air passage to said intake passage (34),
a fuel injection valve (19) for feeding the injected fuel to said swirling airflow, and
a heater (50) in said intake passage (34) to heat at least one part of said injected fuel.

2. A fuel-heating type fuel injection apparatus used for an internal combustion engine (1), said fuel injection apparatus comprising:
an air inlet (36) in the inner wall of an intake passage (34) in the upstream side of a throttle valve (15) when said throttle valve (15) is located on the idle opening position,
a fuel-air mixture chamber (80) which meets an intake passage (34) in the downstream side of said throttle valve (15),
an air passage (35) for connecting said air inlet (36) and said fuel-air mixture chamber (80),
a fuel injection valve (19) for supplying injected fuel to said fuel-air mixture chamber (80),
a rectifying member (40) provided on the exit of said air passage (35) to give a force to make a swirling airflow in said fuel-air mixture chamber (80) when the air flows from said air passage (35) to said fuel-air mixture chamber (80), and
a heater (50) in the inner wall of said fuel-air mixture chamber (80) to heat at least one part of a swirling mixture in said fuel-air mixture chamber (80).

3. A fuel-heating type fuel injection apparatus used for an internal combustion engine (1), said fuel injection apparatus comprising:
an air inlet (36) in the inner wall of an intake passage (34) in the upstream side of a throttle valve (15) when said throttle valve (15) is located on the idle opening position,
a fuel-air mixture chamber (80) which meets an intake passage (34) in the downstream side of said throttle valve (15),
a fuel injection valve (19) which supplies injected fuel to said fuel-air mixture chamber (80),
an air swirling element (40) to give a force to make a swirling airflow in said fuel-air mixture chamber (80) when the air flows into said fuel-air mixture chamber (80),
a heater (50) in the inner wall of said fuel-air mixture chamber (80) to heat at least one part of a swirling mixture in said fuel-air mixture chamber (80), and
a plurality of fuel-air mixture passages that connect said fuel-air mixture chamber (80) and the inlet port (14) of each cylinder of an engine (1).

4. A fuel-heating type fuel injection apparatus used for an internal combustion engine (1), said fuel injection apparatus comprising:
an air inlet (36) which opens in the upstream of a throttle valve (15) when said throttle valve (15) is located on the idle opening position,
a mixing space, in the downstream side of said throttle valve (15) or on the way to there, for mixing fuel with airflow supplied from said air inlet (36) and heating the air-fuel mixture with a heater (50),
wherein the opening of said air inlet (36) is controlled by a motor (10M) which drives said throttle valve (15).

5. An internal combustion engine equipped with a fuel-heating type fuel injection apparatus,
said engine comprising:
an air inlet (36) in the inner wall of an intake passage (34) in the upstream side of a throttle valve (15) when said throttle valve (15) is located on the idle opening position,
a fuel-air mixture chamber (80) which meets said intake passage (34) in the downstream side of said throttle valve (15),
a fuel injection valve (19) which supplies injected fuel to said fuel-air mixture chamber (80),
an air swirling element (40) to give a force to make a swirling airflow in said fuel-air mixture chamber (80) when the air flows into said fuel-air mixture chamber (80),
a heater (50) in the inner wall of said fuel-air mixture chamber (80) to heat at least one part of the swirling mixture in said fuel-air mixture chamber (80),
a plurality of fuel-air mixture passages that connect said fuel-air mixture chamber (80) and the inlet port (14) of each cylinder of an engine (1), and
another fuel injection valve (19) which is different from said fuel injection valve (18) in each of the intake ports or cylinders.

6. A fuel-heating type fuel injection apparatus used for an internal combustion engine (1), said fuel injection apparatus comprising:
a main intake passage (34) for supplying air into cylinders of an internal combustion engine (1),
a body (10) having a throttle valve (15) in said main passage (34),
a fuel injection valve (19) for injecting fuel into said main passage (34),
a vaporizing means (80, 40, 50) on said main passage (34) to vaporize the injected fuel, and
an air passage (35) which is provided to flow air from the upstream side to the downstream side of said throttle valve (15) within a flow rate controlled by said throttle valve (15),
wherein the air flowing through said air passage (35) is introduced into said main intake passage (34) and mixed with the injected fuel there.

7. A fuel-heating type fuel injection apparatus used for an internal combustion engine (1), said fuel injection apparatus comprising:
at least one of primary fuel injection valve (18) for injecting fuel into each cylinder of an internal combustion engine (1),
a main intake passage (34) for supplying air into each cylinder,
a body (10) containing a throttle valve (15) in said main passage (34) to regulate air flow rate,
a bypass passage (35) for connecting said main passage (34) in the upstream side and of said throttle valve (15) and said main passage in the downstream side of it (15),
a secondary fuel injection valve (19) for injecting fuel into said bypass passage (35), and
a vaporizing means (80, 40, 50) provided to vaporize the injected fuel in said bypass passage (35),
wherein said bypass passage (35) is formed as an internal passage of said body (10), and a swirling element (40) is provided in said bypass passage (35) to give a swirling force to the air flowing through said bypass passage (35).
